# EUROPÄISCHE PATENTANMELDUNG

(11) **EP 2 535 170 A1**
(43) Veröffentlichungstag der Anmeldung: **19.12.2012**
(21) Anmeldenummer: 12170118.9
(22) Anmeldetag: 30.05.2012
(51) Int. Cl.: B29C 70/08, B29C 37/00, B64F 5/00, C09D 5/00, C09D 9/00

(54) **Verfahren zur Herstellung von eingefärbten Faserverbundbauteilen und Verkehrsflugzeug mit solchen Bauteilen**

(30) Priorität: 16.06.2011 DE 102011051099
(71) Anmelder: Deutsches Zentrum für Luft- und Raumfahrt e.V., 51147 Köln (DE)
(72) Erfinder: Fischer, Frank, 38114 Braunschweig (DE); Knote, Andreas, 38114 Braunschweig (DE); Ströhlein, Tobias, 38110 Braunschweig (DE)
(74) Vertreter: Rehberg Hüppe + Partner

(57) **Zusammenfassung**

Bei einem Verkehrsflugzeug mit mindestens einem außen liegenden Faserverbundbauteil und mit einer zumindest teilweise von außerhalb des Verkehrsflugzeugs sichtbaren durchgefärbten Schicht ist die durchgefärbte Schicht im Bereich des Faserverbundbauteils eine als Teil des Faserverbundbauteils in einem Formwerkzeug ausgehärtete integrale Deckschicht des Faserverbundbauteils. Dabei ist eine außen liegende Oberfläche der durchgefärbten Schicht bereichsweise mit einem farbigen Lack lackiert ist und/oder bereichsweise mit einer farbigen Folie beklebt ist und insgesamt mit einem Klarlack abgedeckt.

## Beschreibung

### TECHNISCHES GEBIET DER ERFINDUNG

Die Erfindung bezieht sich auf ein Verkehrsflugzeug mit mindestens einem außen liegenden, d. h. zur Außenhaut des Verkehrsflugzeugs zählenden Faserverbundbauteil und mit einer zumindest teilweise von außerhalb des Verkehrsflugzeugs sichtbaren durchgefärbten Schicht sowie auf ein Verfahren zur Herstellung eines bei einem Verkehrsflugzeug außen liegenden Faserverbundbauteils, wobei das Faserverbundbauteil mit einer zumindest teilweise von außerhalb des Verkehrsflugzeugs sichtbaren durchgefärbten Schicht versehen wird.

### STAND DER TECHNIK

Zivile Verkehrsflugzeuge, wie zum Beispiel die Modelle der Airbus A320-Familie, werden ohne abweichende Angaben des Kunden vollständig weiß lackiert und dann mit den vom Kunden gewünschten Markierungen und Bildmarken versehen. Der weiße Lack wird nicht direkt auf die zu lackierenden Bauteile des Verkehrsflugzeugs, sondern erst nach Schleifen und Auftragen einer Grundierung aufgebracht. Die Grundierung versiegelt die außen liegende Oberfläche der Bauteile des Verkehrsflugzeugs, typischerweise aus Aluminium oder Faserverbundwerkstoffen, als Korrosionsschutz und gegenüber dem Eindringen von Dämpfen und Flüssigkeiten. Sie hat außerdem die Aufgabe, die Haftung des weißen Decklacks auf dem Flugzeugrumpf zu gewährleisten. Auf dem weißen Decklack werden dann die Markierungen und Bildmarken des jeweiligen Kunden als partielle Lackierung, die auch als "Livery Colors" oder "Decorative Paint Schemes" bezeichnet wird, oder in Form von dünnen Folien aufgebracht. Als letzte Schicht wird ein Klarlack aufgetragen, der die darunter liegenden farbigen Schichten versiegelt. Dieser Klarlack bestimmt die Oberflächengüte des Verkehrsflugzeugs auch im Hinblick auf die Luftreibung im Flug.

Die meisten Fluggesellschaften lackieren ihre Flugzeuge alle vier Jahre im Rahmen der großen Wartungsereignisse "C-Check" und "D-Check" zumindest in Form des Decklacks neu. Eine vollständige Neulackierung findet in der Regel alle fünf bis sieben Jahre statt. Dies entspricht bei einer Lebensdauer eines Verkehrsflugzeugs von 30 bis 40 Jahren bis zu sechs vollständigen Neulackierungen. Einige Fluggesellschaften, wie zum Beispiel American Airlines, haben sich aus Gründen der Produktdifferenzierung und/oder aufgrund der Gewichtsersparnis und damit der Reduktion des Treibstoffverbrauchs für eine teilweise oder vollständige Politur des Aluminiumrumpfs anstelle einer vollständigen Lackierung entschieden. Dadurch werden die Grundierung und die Lackschichten eingespart, und es müssen nur die Markierungen und Bildmarken der Fluggesellschaft aufgebracht werden. Dies hat jedoch eine Steigerung der Betriebskosten zur Folge, und die Einsparungen der Treibstoffkosten aufgrund des entfallenen Lackgewichts werden durch den Mehraufwand durch zusätzliche Wäschen zur Verhinderung des Aufbaus einer Oxidationsschicht auf dem Aluminium sowie durch bis zu drei notwendige Polituren der Aluminiumoberfläche pro Jahr überkompensiert. Zudem besteht der Rumpf vieler moderner Verkehrsflugzeuge zumindest teilweise aus Faserverbundbauteilen, die keine Oberfläche aus polierbarem Aluminium aufweisen.

Aus dem Modellbau, Segelflugzeugbau und Bootsbau ist es bekannt, einen Rumpf aus Kohlefaserverbundwerkstoff mit einer über die Dicke eines normalen Lackes hinausgehenden eingefärbten Deckschicht, einem sogenannten Gelcoat, zu versehen. Dazu wird ein Kunstharz in zähflüssiger Form auf den Rumpf aufgesprüht und auf diesem ausgehärtet. Anschließend kann eine Politur des Gelcoats erfolgen, um die einer Überströmung ausgesetzte Oberfläche des Rumpfs auszubilden.

Bei der Herstellung von Faserverbundbauteilen in Formwerkzeugen ist es grundsätzlich bekannt, nach dem Auftragen eines Trennmittels auf eine formgebende Oberfläche des Formwerkzeugs ein zähflüssiges Kunstharz auf das Trennmittel aufzutragen. Auf dieser Schicht aus zähflüssigem Kunstharz wird dann die Vorform des Faserverbunds ausgebildet. D. h. noch mit Matrixharz zu infiltrierende trockene Verstärkungsfasern oder sogenannte Prepregs, die neben den Verstärkungsfasern auch bereits das Matrixharz enthalten, werden aufgelegt. Das Kunstharz an der formgebenden Oberfläche bildet bei dem fertigen Faserverbundbauteil eine Oberfläche aus, die glatter und geschlossener ist als bei Faserverbundbauteilen, die ohne eine solche Schicht aus zähflüssigem Kunstharz hergestellt werden.

Die DE 10 2009 039 860 A1 offenbart ein Verbundbauteil aus Polyurethan-Sandwichmaterialien mit sogenannter Class-A-Deckschicht. Hiermit ist eine perfekte, fehlerfreie und homogene Oberfläche gemeint. Diese kann sowohl in der gewünschten Farbe bereits fertig eingefärbt als auch lackiert oder derart ausgeführt sein, dass die abschließende Farbe durch eine Lackierung hergestellt wird. Das Verbundbauteil besteht aus einer faserverstärkten Polyurethan-Schicht, einer Papierwabenzwischenschicht und ggf. einer Kunststoffschaumschicht sowie einer weiteren faserverstärkten Polyurethan-Schicht, auf der abschließend eine Polyurethan-Deckschicht aufgebracht wird. Diese zusätzliche Polyurethan-Deckschicht erzeugt die notwendige Oberflächenqualität. Ausgebildet wird die Polyurethan-Deckschicht in einem separaten Werkzeug, in dem eine zuvor hergestellte tragende Schichtfolge in einer Kavität angeordnet wird, in der ein definierter Spalt verbleibt, der mit dem Polyurethan für die Deckschicht gefüllt wird, das dann bei erhöhtem Druck und erhöhter Temperatur ausgehärtet wird. Das bekannte Verbundbauteil ist zur Verwendung als Teil einer Fahrzeugkarosserie vorgesehen.

Aus der DE 20 2008 007 301 U1 ist ein Leichtbauteil aus einem verstärkten duroplastischen Kunststoff bekannt, das eine primär erzeugte dekorative Oberfläche aufweist. Die Oberfläche wird durch Auflegen einer vorimprägnierten Dekorschicht bereits während des Pressens erzeugt. Die Dekorschicht umfasst ein bedrucktes Papier und/oder ein textiles Fasergebilde und ggf. ein zusätzliches Overlaypapier. Das Leichtbauteil ist auch zur Verwendung in der Flugzeugindustrie vorgesehen.

Aus der EP 1 588 838 A1 ist ein Faserverbundbauteil aus Prepreg-Schichten bekannt. Dieses Faserverbundbauteil ist auch für Flugzeuge vorgesehen, und es ist an seiner äußeren Oberfläche mit einer durchgefärbten Farbschicht beschichtet.

Aus der EP 1 724 098 A1 ist ein Prozess zur Herstellung eines laminierten Verbundbauteils bekannt, beispielsweise in Form einer Sitzschale für ein Flugzeug. Einer Deckschicht dieses Verbundbauteils kann eine Farbe zugesetzt sein.

Aus der CH 304468 A ist ein Verfahren zum Gießen eines eine Einlage enthaltenen Kunststoffformkörpers bekannt. Dabei ist der die Einlage umgebende Kunststoff farbiges Kunstharz, so dass die Einlage von außen nicht erkennbar ist. Das bekannte Verfahren kann zur Herstellung von Bootshüllen und -bestandteilen verwendet werden.

### AUFGABE DER ERFINDUNG

Der Erfindung liegt die Aufgabe zugrunde, ein Verkehrsflugzeug und ein Verfahren zur Herstellung eines Faserverbundbauteils für ein Verkehrsflugzeug aufzuzeigen, bei denen der Aufwand, der sich für die Ausbildung und Wartung einer von außerhalb des Verkehrsflugzeugs zumindest teilweise sichtbaren durchgefärbten Schicht ergibt, gegenüber dem aufgezeigten Stand der Technik reduziert ist.

### LÖSUNG

Die Aufgabe der Erfindung wird durch ein Verkehrsflugzeug mit den Merkmalen des unabhängigen Patentanspruchs 1 und durch ein Verfahren zu seiner Herstellung mit den Merkmalen des Oberbegriffs des unabhängigen Patentanspruchs 7 gelöst. Bevorzugte Ausführungsformen des neuen Verkehrsflugzeugs und des neuen Verfahrens zu seiner Herstellung sind in den abhängigen Patentansprüchen definiert.

### BESCHREIBUNG DER ERFINDUNG

Bei dem erfindungsgemäßen Verkehrsflugzeug ist die zumindest teilweise von außerhalb des Verkehrsflugzeugs sichtbare durchgefärbte Schicht im Bereich mindestens eines Faserverbundbauteils eine als Teil des Faserverbundbauteils in einem Formwerkzeug ausgehärtete integrale Deckschicht des Faserverbundbauteils. Das heißt, die Schicht, die die Grundfarbe des Verkehrsflugzeugs im Bereich des Faserverbundbauteils ausbildet, ist nicht als Lackierung auf einer Grundierung des Faserverbundbauteils ausgebildet oder als andere nachträglich auf das Faserverbundbauteil aufgebrachte Deckschicht. Vielmehr ist die durchgefärbte Schicht bei der Herstellung des Faserverbundbauteils in seinem Formwerkzeug als Deckschicht ausgebildet und dabei mit allen anderen Teilen des Faserverbundbauteils ausgehärtet worden. Die durchgefärbte Schicht ist daher ein integraler Bestandteil des Faserverbundbauteils, der nahtlos mit den anderen Bestandteilen des Faserverbundbauteils zusammenhängt. Der einzige Unterschied zwischen der Deckschicht und den darunter liegenden Schichten des Faserverbundbauteils besteht darin, dass eine Kunstharzmatrix im Bereich der Deckschicht einen Zuschlag aus Farbstoffen und/oder Farbpigmenten aufweist, mit dem die Schicht durchgefärbt ist, aber in der Regel keine Verstärkungsfasern umfasst, während sie in darunter liegende Schichten des Faserverbundbauteils Verstärkungsfasern umfasst, aber in der Regel keinen Zuschlag an Farbstoffen und/oder Farbpigmenten in ihrer Kunstharzmatrix aufweist.

Die außen liegende Oberfläche der durchgefärbten Schicht, die erfindungsgemäß als integrale Deckschicht des Faserverbundbauteils ausgebildet ist, ist bereichsweise mit einem farbigen Lack lackiert und/oder bereichsweise mit einer farbigen Folie beklebt und insgesamt mit einem Klarlack abgedeckt. Grundsätzlich ist ein Klarlacküberzug der farbigen Deckschicht des Faserverbundbauteils nicht erforderlich. Ein solcher Klarlack kann jedoch vorteilhaft sein, um eine geschlossene Oberfläche des Verkehrsflugzeugs auszubilden, wenn auf der Oberfläche der durchgefärbten Schicht Markierungen und Bildmarken einer Fluggesellschaft oder andere farbige Elemente angebracht wurden. Diese Markierungen, Bildmarken und anderen farbigen Elemente können grundsätzlich als Lackierung ausgeführt sein. Bevorzug ist es bei dem erfindungsgemäßen Verkehrsflugzeug jedoch, wenn Markierungen und Bildmarken einer Fluggesellschaft durch Bekleben mit einer farbigen Folie aufgebracht werden. Derartige Folien sind relativ leicht wieder zu entfernen und erlauben es daher, die Markierungen und Bildmarken zu erneuern und/oder auszutauschen, um ein Verkehrsflugzeug auch durch eine andere Fluggesellschaft betreiben zu können.

Bei dem neuen Verkehrsflugzeug ist es in diesem Zusammenhang bevorzugt, wenn zumindest der farbige Lack und/oder ein Klebstoff, mit dem die Folie zur Ausbildung von Markierungen und Bildmarken aufgeklebt ist, und der Klarlack einerseits und die durchgefärbte Schicht, d. h. die Deckschicht des Faserverbundbauteils, andererseits unterschiedliche Löslichkeiten aufweisen. Insbesondere sind der farbige Lack und/oder der Klebstoff sowie der Klarlack mit einem Lösungsmittel entfernbar, das die Deckschicht des Faserverbundbauteils nicht angreift. Durch das Ausbilden der durchgefärbten Schicht als integral ausgehärtete Deckschicht des Faserverbundbauteils weist die durchgefärbte Schicht bei dem neuen Verkehrsflugzeug sowieso einen besonders hohen Vernetzungsgrad und eine besonders hohe chemische Stabilität auf, so dass es leicht möglich ist, einen darauf aufgebrachten Klarlack und/oder darauf aufgeklebte Folien mit einem Lösungsmittel abzuwaschen, ohne die Deckschicht des Faserverbundbauteils zu beschädigen.

Die als Deckschicht des Faserverbundbauteils ausgebildete Schicht ist vorzugsweise weiß durchgefärbt. Weiß ist die Grundfarbe der Flugzeuge der meisten Fluggesellschaften. Flugzeuge weißer Grundfarbe können leicht mit den Markierungen und Bildmarken einzelner Fluggesellschaften versehen werden. Auch eine Abänderung der Markierungen und Bildmarken auf eine andere Fluggesellschaft ist einfach möglich. Flugzeuge weißer Grundfarbe sind daher für Flugzeugleasinggesellschaften besonders vorteilhaft. Tatsächlich kann der weit überwiegende Flugzeugmarkt mit Flugzeugen weißer Grundfarbe bedient werden. Das heißt, die Vorverlagerung der Farbfestlegung in die Herstellung der Faserverbundbauteile und die damit verlorengehende Flexibilität in der Farbgebung des neuen Verkehrsflugzeugs stellt keinen schwerwiegenden Nachteil dar. Vielmehr kann der Vorteil ausgenutzt werden, dass das aus Faserverbundbauteilen zusammengesetzte erfindungsgemäße Verkehrsflugzeug zumindest im Bereich dieser Faserverbundbauteile ohne weiteres vollflächig weiß ist.

Auch die Oberflächenrauhigkeit kann nach dem Herstellen des Faserverbundbauteils durch Aushärten in seinem Formwerkzeug bereits so gering sein, dass die durchgefärbte Schicht in Form der integralen Deckschicht des Faserverbundbauteils keinen Nachteil gegenüber einem erst später aufgetragenen farbigen Lack aufweist. Die Deckschicht des Faserverbundbauteils kann aber auch aufpoliert sein, um eine noch glattere Oberfläche bereitzustellen oder um durch Abrasion oder sonstige Oberflächenveränderungen im Betrieb aufgekommene Rauhigkeiten wieder zu beseitigen.

Es versteht sich, dass bei dem erfindungsgemäßen Verkehrsflugzeug die durchgefärbte Schicht vorzugsweise im Bereich aller außen liegenden Faserverbundbauteile eine als Teil der Faserverbundbauteile in deren Formwerkzeugen ausgehärtete integrale Deckschicht der Faserverbundbauteile ist. Wenn alle Sichtflächen des Verkehrsflugzeugs durch Faserverbundbauteile ausgebildet werden, weist das erfindungsgemäße Verkehrsflugzeug so bereits nach dem Zusammenbau der Faserverbundbauteile seine gewünschte Grundfarbe auf.

In der folgenden Erläuterung des erfindungsgemäßen Verfahrens wird insbesondere auf solche Details abgestellt, die nicht bereits bei der Erläuterung des erfindungsgemäßen Verkehrsflugzeugs Berücksichtigung fanden.

Bei dem erfindungsgemäßen Verfahren zur Herstellung eines Faserverbundbauteils für ein Verkehrsflugzeug wird zum Versehen des Faserverbundbauteils mit der zumindest teilweise von außerhalb des Verkehrsflugzeugs sichtbaren durchgefärbten Schicht eine noch nicht ausgehärtete Vorform der durchgefärbten Schicht als Teil einer Vorform des gesamten Faserverbundbauteils in ein Formwerkzeug eingebracht, und die Vorform der durchgefärbten Schicht wird in dem Formwerkzeug zu einer integralen Deckschicht des Faserverbundbauteils ausgehärtet. Das heißt, die Deckschicht durchläuft denselben Aushärtungsprozess wie alle anderen Bestandteile der Vorform des späteren Faserverbundbauteils.

Die Deckschicht wird mit einem Klarlack lackiert, nachdem sie zuvor zum Aufbringen von Markierungen und Bildmarken einer Fluggesellschaft oder anderer farbiger Elemente bereichsweise mit einer farbigen Folie beklebt wird und/oder partiell anders als in ihrer Grundfarbe lackiert wird.

Hierbei ist es bevorzugt, wenn zumindest der Klarlack und ein Klebstoff, mit dem die Folie aufgeklebt wird oder der zum Aufbringen der Markierungen und Bildmarken verwendete farbige Lack einerseits und eine Matrix aus Kunstharz der Deckschicht andererseits auf unterschiedliche Löslichkeiten eingestellt werden, um mit einem Lösungsmittel alle auf die Deckschicht aufgebrachten zusätzlichen Schichten ohne Beschädigung der Deckschicht entfernen zu können. Eine dennoch von dem Lösungsmittel angegriffene Deckschicht der Oberfläche kann durch Glattpolieren aufgearbeitet werden. Hierbei ist die vergleichsweise große Dicke der Deckschicht als durchgefärbte Schicht von Vorteil. So besteht keine Gefahr, dass beim Polieren der Deckschicht tiefer liegende Schichten des Faserverbundbauteils sichtbar werden, auch wenn diese, was häufig aufgrund der verwendeten Kohlenstoffverstärkungsfasern der Fall ist, eine schwarze Farbe aufweisen.

Vorzugsweise wird die nicht ausgehärtete Vorform der durchgefärbten Schicht bei dem erfindungsgemäßen Verfahren auf eine formgebende Oberfläche des Formwerkzeugs aufgetragen. Die Rauhigkeit der Deckschicht des Faserverbundbauteils wird so durch die Rauhigkeit der formgebenden Oberfläche bestimmt und kann sehr gering sein. Dies gilt insbesondere dann, wenn die nicht ausgehärtete Vorform der durchgefärbten Schicht ohne Trennmittel oder nach vorherigem Aufbringen eines verlorenen Trennmittels oder einer nur sehr dünnen, gleichmäßigen Schicht eines nicht verlorenen Trennmittels auf die formgebende Oberfläche des Formwerkzeugs aufgetragen wird.

Die nicht ausgehärtete Vorform der durchgefärbten Schicht wird vorzugsweise aus einem Kunstharz mit eingebetteten Farbstoffen und/oder Farbpigmenten ausgebildet. Dabei kann das Kunstharz eine ähnlich oder sogar dieselbe Grundzusammensetzung aufweisen wie ein Kunstharz, in das die Verstärkungsfasern des Faserverbundbauteils eingebettet werden. In jedem Fall ist auf eine so hohe Kompatibilität der Kunstharze zu achten, dass sie in dem Übergangsbereich miteinander vernetzen, d. h. starke chemische Bindungen eingehen können.

Die Deckschicht des aus dem Formwerkzeug entformten Faserverbundbauteils wird vorzugsweise erst nach ihrem Verbau im Rumpf des Verkehrsflugzeugs endbehandelt. Grundsätzlich ist aber auch eine Endbehandlung der Deckschicht bereits bei dem einzelnen Faserverbundbauteil möglich. Dann muss jedoch darauf geachtet werden, dass die endbehandelte Deckschicht nicht mehr in einer diese Endbehandlung gefährdenden Weise gehandhabt wird.

Die Deckschicht des aus dem Formwerkzeug entformten Faserverbundbauteils kann glatt poliert werden, wenn die originäre Rauhigkeit der Oberfläche der Deckschicht nach dem Entformen noch zu groß ist.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile von allen erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden.

### KURZBESCHREIBUNG DER FIGUREN

Die Erfindung wird im Folgenden anhand von Ausführungsbeispielen unter Bezugnahme auf die beigefügten Zeichnungen näher erläutert und beschrieben.
- **Fig. 1**: ist ein Flussdiagramm eines erfindungsgemäßen Verfahrens zur Herstellung eines Faserverbundbauteils für ein erfindungsgemäßes Flugzeug; und
- **Fig. 2**: ist ein Flussdiagramm weiterer Verfahrensschritte des erfindungsgemäßen Verfahrens.

### FIGURENBESCHREIBUNG

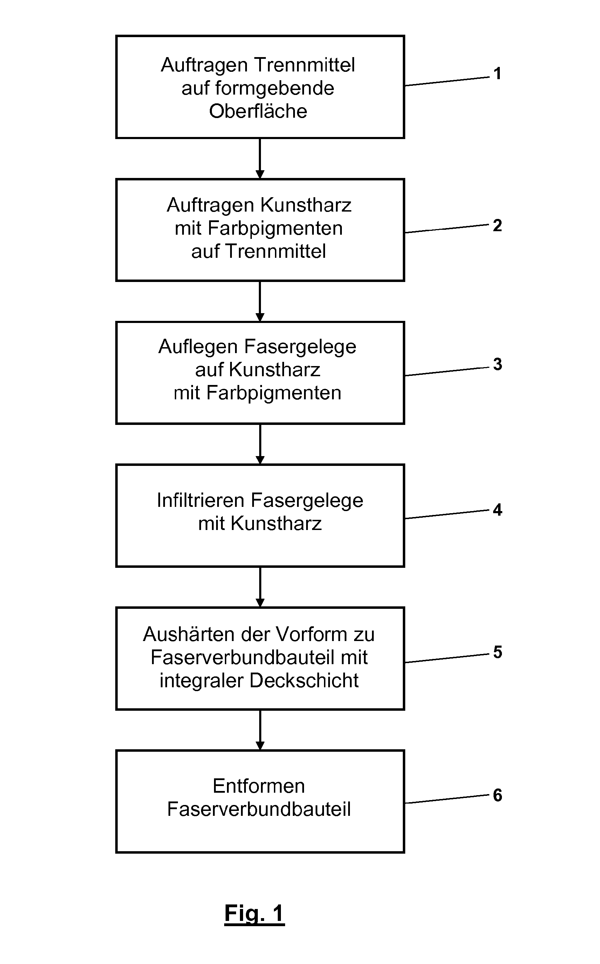

In einem ersten Schritt 1 des in **Fig. 1** skizzierten Verfahrens wird ein Trennmittel auf eine formgebende Oberfläche eines Formwerkzeugs aufgetragen. Auf dieses Trennmittel wird in einem Schritt 2 ein Kunstharz zur Ausbildung einer nicht ausgehärteten Vorform für eine Deckschicht eines herzustellenden Faserverbundbauteils aufgetragen. Diese Vorform weist in das Kunstharz aufgebettete Farbpigmente ein, die die spätere Deckschicht durchfärben. In einem Schritt 3 werden auf die Vorform der Deckschicht Fasergelege aufgelegt, die die Verstärkungsfasern des herzustellenden Faserverbundbauteils umfassen. Dann wird die Vorform abgedichtet, evakuiert, bevor in einem Schritt 4 die Fasergelege mit Kunstharz infiltriert werden. Dieses Kunstharz ist zur Ausbildung der mit den Verstärkungsfasern faserverstärkten Matrix des Faserverbundbauteils vorgesehen. Alternativ können, statt ein Fasergelege nachträglich mit Kunstharz zu infiltrieren, sogenannte Prepregs verwendet werden, die neben den Verstärkungsfasern auch bereits das Kunstharz zur Ausbildung der faserverstärkten Kunstharzmatrix aufweisen. In einem Schritt 5 erfolgt dann das Aushärten der gesamten Vorform für das Faserverbundbauteil zu einem Faserverbundbauteil mit integraler durchgefärbter Deckschicht. Im letzten Schritt 6 von Fig. 1 wird dieses Faserverbundbauteil aus dem Formwerkzeug entformt. Die Deckschicht des Faserverbundbauteils weist dann bereits die Grundfarbe eines Verkehrsflugzeugs auf, für das das Faserverbundbauteil als von außen sichtbares Bauteil vorgesehen ist. Auch die Oberflächenqualität der Deckschicht kann bereits nach dem Herstellen des Faserverbundbauteils so hoch sein, dass sie keiner Nachbearbeitung bedarf.

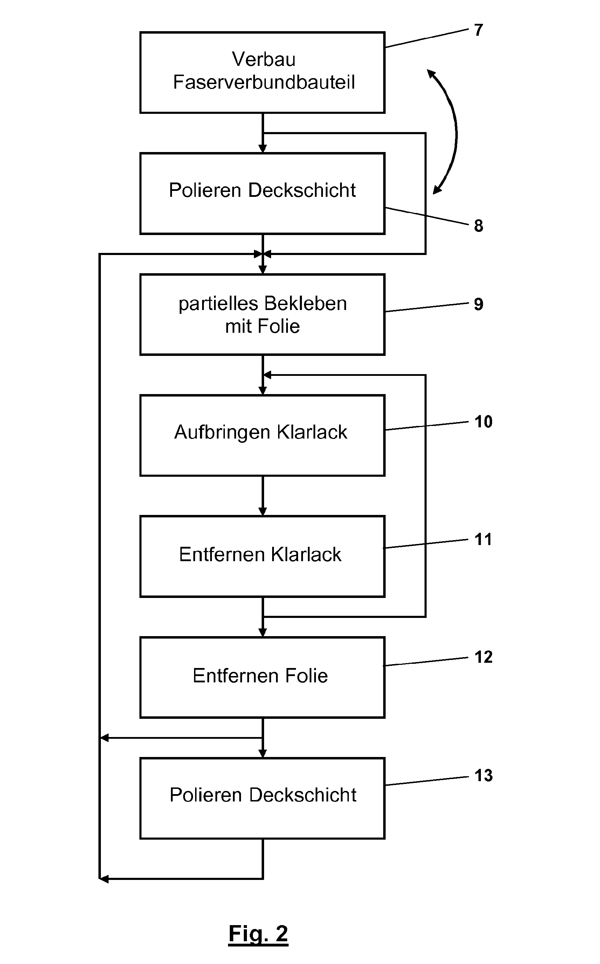

**Fig. 2** skizziert die sich anschließenden Schritte beginnend mit einem Schritt 7, indem das Faserverbundbauteil, welches in dem Verfahren nach Fig. 1 hergestellt wurde, im oder am Rumpf eines Verkehrsflugzeugs verbaut wird. Hieran kann sich in einem Schritt 8 ein Polieren der Deckschicht des Faserverbundbauteils anschließen, wenn die Oberflächenqualität der Deckschicht noch nicht ausreichend sein sollte. Eine solche Politur kann grundsätzlich auch schon vor dem Verbau des Faserverbundbauteils erfolgen. Anschließend erfolgt in einem Schritt 9 das partielle Bekleben der Deckschicht des Faserverbundbauteils mit farbiger Folie, um Markierungen und Bildmarken einer Fluggesellschaft, für die das jeweilige Verkehrsflugzeug vorgesehen ist, aufzubringen. Grundsätzlich ist es auch möglich, diese Markierungen und Bildmarken durch partielles Lackieren der Deckschicht aufzubringen. In einem Schritt 10 wird danach ein Klarlack aufgebracht, der eine über die aufgeklebte Folie hinweg geschlossene Oberfläche bereitstellt.

Wenn nach einer gewissen Nutzungsdauer eine Aufarbeitung der Oberfläche des Rumpfs des jeweiligen Verkehrsflugzeugs erforderlich ist oder eine Zuordnung des Verkehrflugzeugs zu einer anderen Fluggesellschaft erfolgen soll, werden in einem Schritt 11 der Klarlack und in einem weiteren Schritt 12 ggf. auch die aufgeklebten Folien entfernt und dann durch Wiederholen der Schritte 9 und 10 durch gleiche oder andere Folien erneuert und durch den Klarlack abgedeckt. Zusätzlich kann, wenn die Deckschicht des Faserverbundbauteils z. B. durch das Entfernen des Klarlacks und der Folie angegriffen ist, auch diese in einem Schritt 13 aufpoliert werden. Soweit einzelne Faserverbundbauteile bei dem jeweiligen Verkehrsflugzeug nicht mit Markierungen und/oder Bildmarken und entsprechenden Folien beklebt werden, kann auf einen Überzug mit dem Klarlack verzichtet werden. Dann ist es ausreichend, die Deckschicht des Faserverbundbauteils in den üblichen Wartungsintervallen aufzupolieren.

## Patentansprüche

1. Verkehrsflugzeug mit mindestens einem außen liegenden Faserverbundbauteil und mit einer zumindest teilweise von außerhalb des Verkehrsflugzeugs sichtbaren durchgefärbten Schicht, **dadurch gekennzeichnet, dass** die durchgefärbte Schicht im Bereich des mindestens einen Faserverbundbauteils eine als Teil des Faserverbundbauteils in einem Formwerkzeug ausgehärtete integrale Deckschicht des Faserverbundbauteils ist und dass eine außen liegende Oberfläche der durchgefärbten Schicht bereichsweise mit einem farbigen Lack lackiert ist und/oder bereichsweise mit einer farbigen Folie beklebt ist und insgesamt mit einem Klarlack abgedeckt ist.

2. Verkehrsflugzeug nach Anspruch 1, **dadurch gekennzeichnet, dass** zumindest der farbige Lack und/oder ein Klebstoff, mit dem die Folie aufgeklebt ist, und der Klarlack einerseits und die durchgefärbte Schicht andererseits unterschiedliche Löslichkeiten aufweisen.

3. Verkehrsflugzeug nach einem der vorhergehenden Ansprüche, **dadurch gekennzeichnet, dass** die Schicht mit Farbstoffen und/oder Farbpigmenten durchgefärbt ist, die in eine Kunstharzmatrix der Schicht eingebettet sind.

4. Verkehrsflugzeug nach einem der vorhergehenden Ansprüche, **dadurch gekennzeichnet, dass** die Schicht weiß durchgefärbt ist.

5. Verkehrsflugzeug nach einem der vorhergehenden Ansprüche, **dadurch gekennzeichnet, dass** eine außen liegende Oberfläche der durchgefärbten Schicht glatt poliert ist.

6. Verkehrsflugzeug nach einem der vorhergehenden Ansprüche, **dadurch gekennzeichnet, dass** im Bereich aller außen liegender Faserverbundbauteile die durchgefärbte Schicht eine als Teil der Faserverbundbauteile in deren Formwerkzeugen ausgehärtete integrale Deckschicht der Faserverbundbauteile ist.

7. Verfahren zur Herstellung eines bei einem Verkehrsflugzeug außen liegenden Faserverbundbauteils, wobei das Faserverbundbauteil mit einer zumindest teilweise von außerhalb des Verkehrsflugzeugs sichtbaren durchgefärbten Schicht versehen wird, **dadurch gekennzeichnet, dass** zur Ausbildung der durchgefärbten Schicht im Bereich des Faserverbundbauteils eine noch nicht ausgehärtete Vorform der durchgefärbten Schicht als Teil einer Vorform des gesamten Faserverbundbauteils in ein Formwerkzeug eingebracht wird, dass die Vorform der durchgefärbten Schicht in dem Formwerkzeug zu einer integralen Deckschicht des Faserverbundbauteils ausgehärtet wird und dass die Deckschicht des aus dem Formwerkzeug entformten Faserverbundbauteils bereichsweise mit einem farbigen Lack lackiert und/oder bereichsweise mit einer farbigen Folie beklebt und insgesamt mit einem Klarlack abgedeckt wird.

8. Verfahren nach Anspruch 7, **dadurch gekennzeichnet, dass** zumindest der farbige Lack und/oder ein Klebstoff, mit dem die Folie aufgeklebt wird, und der Klarlack einerseits und eine Matrix aus Kunstharz der Deckschicht andererseits auf unterschiedliche Löslichkeiten eingestellt werden.

9. Verfahren nach Anspruch 7 oder 8, **dadurch gekennzeichnet, dass** die nicht ausgehärtete Vorform der durchgefärbten Schicht auf eine formgebende Oberfläche des Formwerkzeugs aufgetragen wird.

10. Verfahren nach Anspruch 9, **dadurch gekennzeichnet, dass** vor der nicht ausgehärteten Vorform der durchgefärbten Schicht ein Trennmittel auf die formgebende Oberfläche des Formwerkzeugs aufgetragen wird.

11. Verfahren nach einem der Ansprüche 7 bis 10, **dadurch gekennzeichnet, dass** die nicht ausgehärtete Vorform der durchgefärbten Schicht aus einem Kunstharz mit eingebetteten Farbstoffen und/oder Farbpigmenten ausgebildet wird.

12. Verfahren nach einem der Ansprüche 7 bis 11, **dadurch gekennzeichnet, dass** die Deckschicht des aus dem Formwerkzeug entformten Faserverbundbauteils nach dem Verbau des Faserverbundbauteils endbehandelt wird.

13. Verfahren nach einem der Ansprüche 7 bis 12, **dadurch gekennzeichnet, dass** die Deckschicht des aus dem Formwerkzeug entformten Faserverbundbauteils glatt poliert wird.
